**Europäisches Patentamt**

**European Patent Office**

**Office européen des brevets**

(11) Veröffentlichungsnummer: **0 171 641**
**B1**

(12) **EUROPÄISCHE PATENTSCHRIFT**

(45) Veröffentlichungstag der Patentschrift: **05.10.88**

(21) Anmeldenummer: **85108993.8**

(22) Anmeldetag: **18.07.85**

(51) Int. Cl.⁴: **B 60 K 26/04,** F 02 D 11/10

(54) Elektronisches Fahrpedal für ein Kraftfahrzeug.

(30) Priorität: **16.08.84 DE 3430076**
**21.03.85 DE 3510176**

(43) Veröffentlichungstag der Anmeldung:
**19.02.86 Patentblatt 86/08**

(45) Bekanntmachung des Hinweises auf die
Patenterteilung:
**05.10.88 Patentblatt 88/40**

(84) Benannte Vertragsstaaten:
**DE FR IT**

(56) Entgegenhaltungen:
**EP-A-0 060 326**
**EP-A-0 081 630**
**DE-A-2 751 125**
**DE-A-3 205 556**

(73) Patentinhaber: **ROBERT BOSCH GMBH**
**Postfach 50**
**D-7000 Stuttgart 1 (DE)**

(72) Erfinder: **Hahn, Klaus, Dipl.-Ing. (FH)**
**Haaberstrasse 10**
**D-7582 Bühlertal (DE)**
Erfinder: **Junginger, Erich, Ing.**
**Friedrich-Ebert-Strasse 50**
**D-7000 Stuttgart 1 (DE)**
Erfinder: **Schnaibel, Eberhard, Dipl.-Ing.**
**Hochstetterstrasse 1/5**
**D-7251 Hemmingen (DE)**
Erfinder: **Schneider, Erich, Dipl.-Ing.**
**Mozartstrasse 9/1**
**D-7125 Kirchheim (DE)**

Courier Press, Leamington Spa, England.

## Beschreibung

Stand der Technik

Die Erfindung geht aus von einem elektronischen Fahrpedal nach der Gattung der unabhängigen Ansprüche.

Aus der DE-A-31 09 638 ist bereits ein elektronisches Fahrpedal bekannt, bei dem die Drosselklappe eines Kraftfahrzeugs über einen Stellmotor in einem Regelkreis angesteuert wird, wobei ein mit dem Fahrpedal mechanisch verbundenes elektrisches Potentiometer einen Sollwertgeber darstellt und ein mit der Drosselklappe mechanisch verbundenes elektrisches Potentiometer einen Istwertgeber darstellt.

Für den Einsatz eines solchen elektronischen Fahrpedals in einer Leerlaufdrehzahlregelung ist eine sehr genaue Einstellung eines minimalen Öffnungsquerschnittes der Drosselklappe erforderlich, da bei zu kleinem Drosselklappenquerschnitt die Gefahr des Abstellens des Fahrzeugmotors gegeben ist. Weiterhin ist es für die exakte Ansteuerung der Drosselklappe wichtig, deren tatsächlichen Leerlaufanschlag sowie Vollastanschlag zu kennen, um für die dazwischenliegenden Werte eine eindeutige und zwischen die Anschläge eingepaßte Zuordnung von Fahrerwunsch und Drosselklappenstellung durchführen zu können. Es ist somit die Aufgabe der Erfindung, ein elektronisches Fahrpedal vorzuschlagen, das eine selbstlernende Abbildung mechanischer Anschläge der Drosselklappe auf entsprechende Sollwertvorgaben leistet, wobei Ungenauigkeiten aufgrund mechanischer Toleranzen jeweils selbsttätig kompensiert werden.

Die Erfindung betrifft im Prinzip das Erkennen des mechanischen Anschlags der Drosselklappe an ihrem unteren Anschlag (Drosselklappe zu) bzw. an ihrem oberen Anschlag (Drosselklappe ganz auf), um dann aufgrund der entsprechenden Aussagen, die in elektrische Signale umgewandelt werden, die Drosselklappe exakt zwischen den beiden Endstellungen einstellen zu können. Die Erfassung der Endanschläge der Drosselklappe wäre an sich nicht schwierig, wenn sich nicht die Randbedingungen von Fahrzeug zu Fahrzeug bzw. während der Lebensdauer des Fahrzeuges ändern würden. Zu diesen sich ändernden Randbedingungen gehören die mechanischen Toleranzen, Wellenverdrehungen und Alterungseffekte der Elektronik und der Mechanik. Eine mechanische Nachjustierung ist zu ungenau und auch zu zeitaufwendig.

Aufgabe der Erfindung ist also das Erkennen der beiden mechanischen Endstellungen der Drosselklappe und das Bereitstellen von elektrischen Signalen, die diese Einstellungen repräsentieren und die unabhängig von Toleranzen und Alterserscheinungen der Elektronik und der Mechanik sind.

Das Erkennen der Endstellungen der Drosselklappe ist an sich schon im Stand der Technik vorgeschlagen worden, jedoch mit anderen Mitteln als sie Gegenstand der vorliegenden Anmeldung sind. Insbesondere aber ist der durch die EP-A-0081630 bekannte Lösungsvorschlag wesentlich aufwendiger und ungenauer als die Erfindung, insbesondere letzteres deswegen, weil die Toleranzen und Alterungseffekte des Drosselklappenstellungsgebers, nämlich des Potentiometers, nicht berücksichtigt werden.

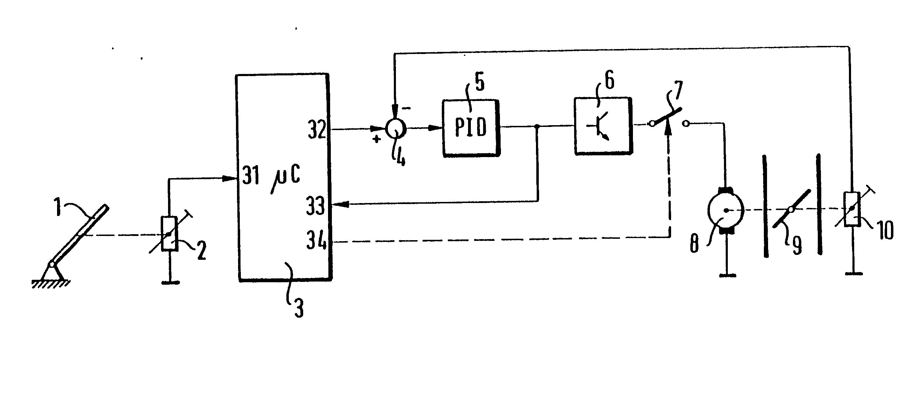

Gemäß der EP-A-0081630 werden die beiden Endstellungen der Drosselklappe ermittelt; diese Ermittlung kann aber nur bei stehendem Motor, d.h. bei stehendem Fahrzeug durchgeführt werden. Um die Ermittlung bei laufendem Motor auszuschließen, sind schon komplizierte logische Schaltungen erforderlich, wie die Fig. 1 dieser Anmeldung zeigt. Der Motor muß aber bei dem bekannten Vorschlag abgestellt sein, da ja die Drosselklappe gewissermaßen von außen in die beiden Endstellungen getrieben wird. Da außerdem die Ermittlung der Endstellungen voneinander abhängig ist, müssen auch noch komplizierte Zeitschaltungen vorgesehen werden. Es wird nämlich der Verstellweg zwischen den Endstellungen I und II ermittelt, indem die Endstellungswerte des Drosselklappen-Potentiometers direkt verwertet werden.

Die Erfindung geht dem gegenüber einen völlig anderen Weg, insbesondere schon deswegen, weil der vorhandene Bordrechner für die Ermittlung der beiden Endstellungen der Drosselklappe herangezogen wird.

Das Grundprinzip der Erfindung besteht nun darin, daß nicht die vom Potentiometer angezeigten Endstellungen direkt verwertet werden, sondern daß die Potentiometerwerte mit Sollwert-Vorgaben mittels des Rechners verglichen werden und erst die Abgleichwerte als effektive Werte der Endstellungen der Drosselklappe im Rechner gespeichert werden. Man erhält also im Gegensatz zu dem Stand der Technik geregelte Werte, die auch von den Potentiometer-Toleranzen selbst unabhängig sind.

Vorteile der Erfindung

Das erfindungsgemäße elektronische Fahrpedal mit den Merkmalen der Ansprüche 1/bzw. 3/ bzw. 4 weist den Vorteil auf, daß entsprechend den Betriebszuständen des Leerlaufs und der Vollast sich die minimale und maximale Drosselklappenöffnung in einfacher Weise dann festlegen läßt, wenn der jeweilige mechanische Drosselklappenanschlag durch eine entsprechende Anschlagsollwertvorgabe festgelegt wird.

Durch die Unteransprüche sind vorteilhafte Ausgestaltungen der Erfindung gegeben. In einfacher Weise wird eine Sollwertvorgabe zur Drosselklappenanschlagfestlegung linear verändert und der Ausgang des Regelverstärkers vom Rechner überwacht. Daraus ergibt sich eine sehr genaue Festlegung des Drosselklappenanschlags unter Berücksichtigung der Regelkreisdynamik. In besonders einfacher Weise läßt sich die minimale Drosselklappenöffnung dadurch festlegen, daß zu ermittelten Drosselklappenminimalanschlag eine Leerlaufkonstante addiert wird. Weiterhin ist die Ermittlung des Drosselklappenminimalanschlags vorteilhaft während des Schubbetriebs des Kraftfahrzeugs möglich, da dieser Betriebszustand ausreichend häufig auftritt und während einer Schubabschaltung das Stromlosschalten des Stellmotors unbemerkt bleibt und nicht stört.

Weiterhin kann auf vorteilhafte Weise unter Mitführung des Istwerts durch den Stellmotor der Sollwert des mechanischen Anschlags verändert werden. Durch ein definiertes Anschlagmoment kann der Sollwert so besonders exakt eingestellt werden. In ähnlicher Weise kann auch eine Sollwertvorgabe für den Vollastanschlag der Drosselklappe selbstlernend festgelegt werden, so daß in einfacher Weise alle zwischen einem Leerlaufsollwert und einem Vollastsollwert liegenden Werte festgelegt werden können.

Zeichnung

Ein Ausführungsbeispiel der Erfindung ist in der Zeichnung dargestellt und in der nachfolgenden Beschreibung näher erläutert. Die einzige Figur veranschaulicht in Blocksymbolen die funktionale Struktur des elektronischen Gaspedales gemäß der Beschreibung des Ausführungbeispiels.

Beschreibung des Ausführungsbeispiels

Ein Gaspedal 1 ist mit einem Fahrpedalstellungsgeber 2 mechanisch drehfest verbunden, wobei der Gaspedalstellungsgeber 2 als Potentiometer ausgebildet ist, dessen Widerstand sich proportional zum Winkel des Fahrpedales verändert. Der Fahrpedalstellungsgeber 2 ist mit einem Eingang 31 eines Rechners 3 verbunden. Der Rechner 3 ist ein aus dem Stand der Technik bekannter Mikrorechner, der über analoge und digitale Ein- und Ausgänge verfügen kann. Dabei werden die analogen Ein- bzw. Ausgangssignale über Analog-Digital- bzw. Digital-Analog-Wandler in digital verarbeitbare Form übergeführt und umgekehrt. Zur Vereinfachung der Darstellung ist dieses jedoch nicht weiter ausgeführt.

Der Rechner 3 erhält somit vom Fahrpedalstellungsgeber 2 einen vom Fahrzeugführer eingestellten Sollwert, den der Rechner 3 seinerseits über einen Ausgang 32 auf den Pluseingang eines Differenzbildners 4 weitergeben kann. Am Minuseingang des Differenzbildners 4 ist ein Drosselklappenstellungsgeber 10 angeschlossen, der mechanisch drehfest mit einer Drosselklappe 9 des Fahrzeugmotors verbunden ist. Somit stellt der Drosselklappenstellungsgeber 10 einen Istwertgeber dar. Am Ausgang des Differenzbildners 4 ergibt sich eine Differenz zwischen Sollwert und Istwert, die in einem Regelkreis Regeldifferenz genannt wird. Demgemäß ist an dem Ausgang des Differenzbildners 4 ein Regler 5 angeschlossen, der eine Endstufe 6 für einen Stellmotor 8 ansteuert, welcher die Drosselklappe 9 antreibt.

Zwischen Endstufe 6 und Stellmotor 8 ist ein Schalter 7 vorgesehen, der über einen Ausgang 34 vom Rechner 3 betätigt werden kann. Im Normalfall ist der Schalter 7 geschlossen, wodurch der Regelkreis geschlossen ist und der Stellmotor 8 Strom erhält. Weiterhin erhält der Rechner 3 an einem Eingang 33 das Ausgangssignal des Reglers 5.

Der Rechner 3 ist als Fahrzeugrechner im Fahrzeug integriert und erhält sämtliche für den Betrieb des Fahrzeugs relevanten Informationen wie etwa Zündzeitpunkt, Temperatur, Einspritzzeitpunkt, Gemischfaktor usw. sowie Signale, die es ihm ermöglichen, einen Zustand des Schubbetriebes zu erkennen. Wenn der Rechner 3 den Betriebszustand "Schubbetrieb" des Kraftfahrzeugs erkennt, schaltet er über den Ausgang 34 den Schalter 7, so daß der Stellmotor 8 stromlos ist. Die Drosselklappe 9 ist mechanisch mit einer Feder gekoppelt, die die Drosselklappe 9 gegen ihren unteren, minimalen Anschlag führt, sobald der Stellmotor 8 kein Gegendrehmoment mehr liefert. Damit gibt der Drosselklappenstellungsgeber 10 einen festen Istwert ab, der dem Drosselklappenminimalanschlag entspricht. Nachdem der Rechner 3 den Schalter 7 geöffnet hat, mindert er ausgehend von einem nach oben definiert begrenzten Maximalsuchsollwert, z.B. entsprechend 10° Drosselklappenöffnungswinkel, schrittweise linear die abgegebene Spannung an seinem Ausgang 32, d.h. der Sollwert des geöffneten Regelkreises wird nach unten verstellt. Gleichzeitig überwacht er an seinem Eingang 33 den Ausgang des Reglers 5. Der Rechner 3 speichert dann denjenigen Wert am Ausgang 32 als repräsentativ für den Drosselklappenminimalanschlag ab, bei dem der Ausgang des Reglers 5 anzeigt, daß die Drosselklappe 9 am Anschlag liegt. Für eine Festlegung der minimalen Drosselklappenöffnung während einer Leerlaufdrehzahlregelung - entsprechend einem virtuellen Leerlaufdrosselklappenanschlag - addiert der Rechner 3 zu diesem so ermittelten Drosselklappenminimalanschlagswert eine Konstante, so daß dem vom Gaspedalstellungsgeber minimal vorgegebenen Sollwert vom Rechner ein modifizierter, unterer Sollwert zugeordnet wird, der eine untere Grenzstellung der Drosselklappe für Leerlaufbetrieb zur Folge hat.

Ein besonderer Vorteil dieses Verfahrens ist es, daß sämtliche mechanischen Toleranzen, Wellenverdrehungen und Alterungseffekte der Elektronik und der Mechanik hierdurch selbsttätig ausgeglichen werden, ohne daß dadurch die empfindliche Leerlaufregelung beeinträchtigt werden kann.

Bei stromlos geschaltetem Stellmotor 8, d.h. bei geöffnetem Schalter 7, ist eine Erfassung des Drosselklappenminimalanschlags anstatt durch Vorgabe eines nach oben definiert begrenzten Maximalsuchsollwertes auch durch Vorgabe eines nach unten definiert begrenzten Minimalsuchsollwertes möglich. Ausgehend von diesem Minimalsuchsollwert erhöht der Rechner schrittweise linear die abgegebene Spannung an seinem Ausgang 32, bis am Ausgang des Reglers 5 auf Regelabgleich, d.h. auf den Zustand Suchsollwert = Anschlagsistwert, entsprechend einer Eingangsregeldifferenz identisch Null, erkannt wird. Der zu diesem Zeitpunkt vorliegende Suchsollwert wird als Betriebssollwert für den Drosselklappenminimalanschlag abgespeichert. In analoger Weise ermittelt der Rechner durch Addition einer Konstanten zu diesem so ermittelten Drosselklappenminimalanschlagswert einen entsprechenden Leerlaufanschlagswert für eine definierte Leerlauföffnung der Drosselklappe.

Ohne Beschränkung der Allgemeinheit kann es in der Praxis vorteilhaft sein, den Regler 5 als PI-bzw. PID-Regler auszuführen. Aufgrund des anteiligen Integralverhaltens eines solchen Reglers ist ohne weiteres ein Schluß von der Stellgröße als Ausgangssgröße auf die Regeldifferenz als Eingangsgröße nicht möglich. Um dennoch aus dem Ausgangssignal zumindest auf einen Vorzeichenwechsel des Eingangssignales schließen zu können, wird die Vorgabe des sich stufenweise verändernden Suchsollwertes so vorgenommen, daß die jeweilige Verweilzeit der Spannung am Ausgang 32 des Rechners zwischen zwei Stufenübergängen wesentlich größer ist als die Zeitkonstante des im Regler enthaltenen Integrators. Dadurch ist sichergestellt, daß die Stellgröße als Ausgangssignal des Reglers spätestens innerhalb eines Zeitintervalles Null wird bzw. ihr Vorzeichen wechselt, das kürzer als die jeweilige Verweilzeit eines Stufenspannungswertes am Ausgang 32 des Rechners ist. Die Auswertung der Stellgröße als Ausgangssignal des Reglers durch den Rechner geschieht jeweils am Ende der Verweilzeit einzelner Spannungsstufen unmittelbar vor Übergang auf die nächste Spannungsstufe. Dadurch wird der Integrator als außerordentlich empfindlicher Komparator mit hoher Verstärkung betrieben, wodurch außerordentlich kleine Spannungsstufen diskriminiert werden können mit der Wirkung, daß der Drosselklappenminimalanschlag mit hoher Genauigkeit festgelegt werden kann. Die erforderliche Zeit für diese Selbstabgleichroutine steht insbesondere während Schubbetriebsphasen in ausreichendem Maß zur Verfügung.

Die Erfassung des Drosselklappenminimalanschlags und damit des virtuellen Leerlaufanschlags der Drosselklappe kann jedoch auch bei geschlossenen Schalter 7, also bei eingeschaltetem Stellmotor 8, erfolgen.

Wird vom Rechner am Eingang 31 eine Leerlauflage des Fahrpedals oder aber ein Schubbetriebszustand erkannt, gibt er am Ausgang zunächst einen nach oben definiert begrenzten Maximalsuchsollwert vor, der über dem erwartbaren Betriebssollwert für ein Schließen der Drosselklappe liegen muß. Dieser maximale Suchsollwert wird nun stufenweise linear verkleinert, wobei infolge des geschlossenen Regelkreises der Stellmotor 8 den Istwert jeweils dem entsprechenden momentanen Suchsollwert nachführt. Erreicht die Drosselklappe ihren mechanischen Anschlag, so ändert die Regeldifferenz ihr Vorzeichen, da der Stellmotor zunächst ein Drehmoment gegen die Kraft der Rückstellfeder der Drosselklappe erzeugt hat, ab dem Anschlag der Drosselklappe jedoch ein umgekehrtes Drehmoment in Richtung des Anschlags erzeugen muß. Der Nulldurchgang der Stellgröße kann somit als Anzeichen eines Regelabgleichs erkannt werden, und der zu diesem Zeitpunkt vorliegende Suchsollwert kann als Betriebssollwert abgespeichert werden. Statt der Erkennung des Nulldurchganges der Stellgröße kann aber auch ein ganz bestimmter Wert der Stellgröße, der einer definierten Rückwärtsansteuerung der Drosselklappe gegen ihren Anschlag entspricht, als Abgleichzustand für die Festlegung des Betriebssollwertes für den Drosselklappenminimalanschlag erkannt werden. Der Vorteil dieses Verfahrens liegt darin, daß die Drosselklappe mit einem definierten Drehmoment gegen ihren Anschlag gedrückt wird, so daß der Betriebssollwert auch unabhängig von Reibungen im Anschlagsbereich usw. sehr exakt und definiert erfaßt werden kann.

Ein entsprechendes Verfahren kann bei geschlossenem Regelkreis auch zur Erkennung bzw. Festlegung des Drosselklappenmaximalanschlags, d.h. des Vollastanschlags, durchgeführt werden. Erkennt der Rechner an seinem Eingang 31 eine Vollastlage des Fahrpedals, so gibt er am Ausgang 32 zunächst einen definierten, minimalen Suchsollwert für den Vollastanschlag vor, der dann wiederum schrittweise solange erhöht wird, bis die Drosselklappe gegen den mechanischen Vollastanschlag läuft und der mitgeführte Istwert dadurch an seiner Obergrenze verharrt. Das Erreichen des mechanischen Anschlages, d.h. die dadurch bedingte Begrenzung des Istwertes, bewirkt eine starke Vergrößerung der Stellgröße, da schon eine kleine bleibende Regeldifferenz eines I-Reglers eine praktisch beliebig hohe Stellgröße folgert. Der Anstieg der Stellgröße auf einen Wert oberhalb möglicher Werte innerhalb des Regelhubbereichs wird vom Rechner vermittels einer Schwellwertdiskrimination erkannt und der zu dieser Zeit abgegeben Suchsollwert als Betriebssollwert für den Vollastanschlag der Drosselklappe abgespeichert.

Selbstverständlich kann bei Erkennung einer Vollastlage des Fahrpedals am Eingang 31 des Rechners dieser umgekehrt auch zunächst einen definierten maximalen Suchsollwert für den Vollastanschlag vorgeben, der dann wiederum schrittweise verringert wird, so daß der Istwert an den Anschlag herangeführt und dort festgehalten wird, bis der Suchsollwert dem Istwert bei mechanischem Vollastanschlag der Drosselklappe entspricht und die Stellgröße am Ausgang des Reglers 5 einen bestimmten definierten Wert unterschreitet. Der zu diesem Zeitpunkt abgegebene Suchsollwert wird dann als Betriebssollwert für den Vollastanschlag vom Rechner abgespeichert.

Nach der Erfassung sowohl des Betriebssollwertes für den Leerlauf als auch des Betriebssollwertes für Vollast errechnet der Rechner zwischen beiden Werten eine vorzugsweise lineare Kennlinie, die als Korrekturkennlinie jedem am Eingang 31 erfaßten Pedalstellungswert einen korrekten Sollwert zuordnet.

Ohne Beschränkung der Allgemeinheit kann

das erfindungsgemäße elektronische Fahrpedal auch zur Ansteuerung einer Einspritzpumpe einer selbstzündenden Brennkraftmaschine benutzt werden; in diesem Fall entspricht der Drosselklappe der Verstellhebel der Einspritzpumpe und der Minimal- bzw. Maximal-Stellung der Drosselklappe dem Leerlauf- bzw. Vollastanschlag der Einspritzpumpe.

**Patentansprüche**

1. Elektronisches Fahrpedal für ein Kraftfahrzeug mit einem Sollwertgeber (2), der mechanisch mit einem Gaspedal (1) verbunden ist, mit einem Istwertgeber (10), der mechanisch mit einer Drosselklappe (9) verbunden ist, mit einem Differenzbildner (4), der aus Istwert und Sollwert eine Regeldifferenz bildet, und mit einem Regler (5), der in Abhängigkeit der Regeldifferenz eine Endstufe (6) für den Stellmotor (8) der Drosselklappe (9) ansteuert, dadurch gekennzeichnet, daß zwischen Sollwertgeber (2) und Differenzbildner (4) ein Rechner (3) vorgesehen ist, der erkennt, wenn ein Schubbetrieb vorliegt und der sodann bei abgeschaltetem Stellmotor (8) einen oberen bzw. unteren Suchsollwert, der über bzw. unter dem der geschlossenen Drosselklappe entsprechenden Wert liegt, vorgibt und diesen solange verringert bzw. erhöht, bis am Ausgang des Reglers (5) ein Regelabgleich erkannt wird, und daß der zu diesem Zeitpunkt vorliegende Suchsollwert als Betriebssollwert für den Leerlaufanschlag der Drosselklappe abgespeichert wird.

2. Elektronisches Fahrpedal nach Anspruch 1, dadurch gekennzeichnet, daß zur Erkennung des Leerlaufanschlags der Suchsollwert stufenweise (in digitalen Schritten) linear verringert bzw. erhöht wird, bis die Regeldifferenz gleich Null wird.

3. Elektronisches Fahrpedal für ein Kraftfahrzeug mit einem Sollwertgeber (2), der mechanisch mit einem Gaspedal (1) verbunden ist, mit einem Istwertgeber (10), der mechanisch mit einer Drosselklappe (9) verbunden ist, mit einem Differenzbildner (4), der aus Istwert und Sollwert eine Regeldifferenz bildet und mit einem Regler (5), der in Abhängigkeit der Regeldifferenz eine Endstufe (6) für den Stellmotor (8) der Drosselklappe (9) ansteuert, dadurch gekennzeichnet, daß zwischen Sollwertgeber (2) und Differenzbildner (4) ein Rechner (3) vorgesehen ist, der erkennt, wenn eine Leerlauflage oder Schubbetrieb vorliegt und der sodann bei eingeschaltetem Stellmotor einen oberen bzw. unteren Suchsollwert, der über bzw. unter dem der geschlossenen Drosselklappe entprechenden Wert liegt, vorgibt und diesen unter jeweiligem Nachführen des Drosselklappen-Istwertes solange verringert bzw. erhöht, bis am Ausgang des Reglers (5) ein Antrieb der Drosselklappe gegen den Drosselklappenanschlag erkannt wird, und daß der zu diesem Zeitpunkt vorliegende Suchsollwert als Betriebssollwert für den Leerlaufanschlag der Drosselklappe abgespeichert wird.

4. Elektronisches Fahrpedal für ein Kraftfahrzeug mit einem Sollwertgeber (2), der mechanisch mit einem Gaspedal (1) verbunden ist, mit einem Istwertgeber (10), der mechanisch mit einer Drosselklappe (9) verbunden ist, mit einem Differenzbildner (4), der aus Istwert und Sollwert eine Regeldifferenz bildet, und mit einem Regler (5), der in Abhängigkeit der Regeldifferenz eine Endstufe (6) über einen Stellmotor (8) der Drosselklappe ansteuert, dadurch gekennzeichnet, daß zwischen Sollwertgeber (2) und Differenzbildner (4) ein Rechner (3) vorgesehen ist, der erkennt, wenn Vollastlage vorliegt und der sodann bei eingeschaltetem Stellmotor (8) einen unteren bzw. oberen Suchsollwert, der unter bzw. über dem der voll geöffneten Drosselklappe entsprechenden Wert liegt, und diesen unter Nachführen des jeweiligen Drosselklappen-Istwertes solange erhöht bzw. verringert, bis am Ausgang des Reglers (5) ein Antrieb der Drosselklappe gegen den Drosselklappenanschlag erkannt wird, und daß der zu diesem Zeitpunkt vorliegende Suchsollwert als Betriebssollwert für den Vollastanschlag der Drosselklappe abgespeichert wird.

5. Elektronisches Fahrpedal nach einem oder mehreren der vorangehenden der Ansprüche, dadurch gekennzeichnet, daß im Rechner (3) zwischen den beiden ermittelten Anschlägen eine Korrekturkennlinie erzeugt wird.

6. Elektronisches Fahrpedal nach einem der vorhergehenden Ansprüche, dadurch gekennzeichnet, daß der Rechner (3) eine additive Konstante zum Anschlagsollwert addiert.

7. Elektronisches Fahrpedal nach einem der vorhergehen den Ansprüche, dadurch gekennzeichnet, daß der Stellmotor (8) im Schubbetrieb des Kraftfahrzeuges stromlos geschaltet wird.

8. Elektronisches Fahrpedal nach Anspruch 1 bis 7, dadurch gekennzeichnet, daß die Drosselklappe (9) ersetzt ist durch den Vertellhebel einer Einspritzpumpe.

**Revendications**

1. Pédale d'accélération électronique pour un véhicule motorisé avec un transmetteur de valeur de consigne (2), qui est relié mécaniquement à une pédale de gaz (1), avec un transmetteur de valeur réelle (10), qui est relié mécaniquement à un clapet d'étranglement (9), avec un formateur de différence (4), qui forme une différence de réglage à partir d'une valeur réelle et d'une valeur de consigne, et avec un régulateur (5), qui commande en fonction de la différence de réglage un étage final (6) pur le moteur de réglage (8) du clapet d'étranglement (9), caractérisé en ce qu'un calculateur (3) est prévu entre le transmetteur de valeur de consigne (2) et le formateur de différence (4) et reconnaît si le véhicule est en fonctionnement en frein-moteur et qui alloue alors, avec le moteur de réglage (8) déclenché, une valeur de consigne de recherche supérieure, respectivement inférieure, qui se situe au-dessus, respectivement au-dessous de la valeur correspondant au clapet d'étranglement fermé et limite celle-ci, respectivement la relève, jusqu'à ce qu'un équilibre de régulation soit reconnu à la sortie du régulateur (5) et que la valeur de consigne de recherche existant à ce moment soit enregistrée comme valeur de consigne de fonctionnement pour la butée de ralenti du clapet d'étranglement.

2. Pédale d'accélération électronique selon la revendication 1, caractérisée en ce que la valeur de consigne de recherche est limitée, respectivement relevée, pas à pas (En pas numériques), de manière linéaire, pour la reconnaissance de la butée de pleine charge, jusqu'à ce que la différence de réglage soit nulle.

3. Pédale d'accélération électronique pour un véhicule motorisé, avec un transmetteur de valeur de consigne (2), qui est relié mécaniquement à une pédale de gaz (1), avec un transmetteur de valeur réelle (10), qui est relié mécaniquement à un clapet d'étranglement (9), avec un formateur de différence (4), qui forme une différence de régulation à partir d'une valeur de consigne et d'une valeur réelle et avec un régulateur (5), qui commande en fonction de la différence de réglage un étage final (6) pour le moteur de réglage (8) du clapet d'étranglement (9), caractérisée en ce qu'un calculateur (3) est prévu entre le transmetteur de valeur de consigne (2) et le formateur de différence (4), qui reconnait s'il y a position de ralenti ou bien un fonctionnement en frein-moteur et qui alloue alors avec le moteur de réglage enclenché une valeur de consigne de recherche supérieure, respectivement inférieure, qui se situe au-dessus, respectivement au-dessous de la valeur correspondant au clapet d'étranglement fermé et limite, respectivement relève, celle-ci en suivant chaque fois la valeur réelle du clapet d'étranglement, jusqu'à ce qu'un entraînement du clapet d'étranglement contre la butée d'étranglement soit reconnu à la sortie du régulateur (5) et que la valeur de consigne de recherche, existant à ce moment, soit enregistrée comme valeur de consigne de fonctionnement pour la butée de ralenti du clapet d'étranglement.

4. Pédale d'accélération électronique pour un véhicule motorisé, avec un transmetteur de valeur de consigne (2), qui est relié mécaniquement à une pédale de gaz (1), avec un transmetteur de valeur réelle (10), qui est relié mécaniquement à un clapet d'étranglement (9), avec un formateur de différence (4), qui forme une différence de réglage, à partir d'une valeur réelle et d'une valeur de consigne et avec un régulateur (5), qui commande un étage final (6) sur un moteur de réglage (8) du clapet d'étranglement, en fonction de la différence de réglage, caractérisée en ce qu'un calculateur (3) est prévu entre le transmetteur de valeur de consigne (2) et le formateur de différence (4), qui reconnaît s'il y a pleine charge et qui alloue, avec le moteur de réglage (8) enclenché, une valeur de consigne de recherche inférieure, respectivement supérieure, qui se situe au-dessous, respectivement au-dessus de la valeur correspondant au clapet étranglement complètement ouvert et relève, respectivement diminue, celle-ci en suivant chaque valeur réelle du clapet d'étranglement, jusqu'à ce qu'un entraînement du clapet d'étranglement contre la butée de clapet d'étranglement soit reconnu à la sortie du régulateur (5) et que la valeur de consigne de recherche, existant à ce moment, soit enregistrée comme valeur de consigne de fonctionnement pour la butée de pleine charge du clapet d'étranglement.

5. Pédale d'accélération électronique, selon une ou plusieurs des revendications précédentes, caractérisée en ce qu'une caractéristique de correction est produite dans le calculateur (3), entre les deux butées obtenues.

6. Pédale d'accélération électronique selon l'une des revendications précédentes, caractérisée en ce que le calculateur (3) ajoute une constante additive, par rapport à la valeur de consigne de butée.

7. Pédale d'accélération électronique, selon l'une des revendications précédentes, caractérisée en ce que le moteur de réglage (8) se trouve en manque de tension, lorsque le véhicule est en fonctionnement en frein-moteur.

8. Pédale d'accélération électronique, selon la revendication 1 à 7, caractérisée en ce que le clapet d'étranglement (9) est remplacé par le levier de réglage d'une pompe d'injection.

## Claims

1. Electronic accelerator peddle for a motor vehicle with a setpoint generator (2), which is mechanically connected to an accelerator peddle (1), with an actual-value sensor (10), which is mechanically connected to a throttle (9), with a subtracter (4), which forms a system deviation from actual value and setpoint, and with a controller (5), which actuates an output stage (6) for the servo-motor (8) of the throttle (9) as a function of the system deviation, characterized in that a computer (3) is provided between setpoint generator (2) and subtracter (4), which computer detects when overrun conditions exist and which then, with servo-motor (8) switched off, selects an upper or lower search setpoint which lies above or below, respectively, the value corresponding to the closed throttle, and keeps reducing or increasing this value until a controlled adjustment is detected at the output of the controller (5), and in that the search setpoint available at this point in time is stored as operating setpoint for the idling stop of the throttle.

2. Electronic accelerator peddle according to Claim 1, characterized in that, for detecting the idling stop, the search setpoint is reduced or increased linearly in steps (in digital steps) until the system deviation becomes equal to zero.

3. Electronic accelerator peddle for a motor vehicle with a setpoint generator (2), which is mechanically connected to an accelerator peddle (1), with an actual-value sensor (10), which is mechanically connected to a throttle (9), with a subtractor (4), which forms a system deviation from actual value and setpoint, and with a controller (5), which actuates an output stage (6) for the servo-motor (8) of the throttle (9) as a function of the system deviation, characterized in that a computer (3) is provided between setpoint generator (2) and subtracter (4), which computer detects when an idling situation or overrun conditions exist and which then, with servo-motor switched off, selects an upper or lower search setpoint which lies above or below, respectively, the value corresponding to the closed throttle, and keeps reducing or increasing this value, with respective correction of the throttle actual value, until a propulsion of the throttle against the throttle stop is detected at the output of the controller (5), and in that the search setpoint available at this point in time is stored as operating setpoint for the idling stop of the throttle.

4. Electronic accelerator peddle for a motor vehicle with a setpoint generator (2), which is mechanically connected to an accelerator peddle (1), with an actual-value sensor (10), which is mechanically connected to a throttle (9), with a subtracter (4), which forms a system deviation from actual value and setpoint, and with a controller (5), which actuates an output stage (6) via a servomotor (8) of the throttle, characterized in that a computer (3) is provided between setpoint generator (2) and subtractor (4), which computer detects when a full-load situation exists and which then, with servo-motor (8) switched on, selects a lower or upper search setpoint which lies below or above, respectively, the value corresponding to the fully opened throttle, and keeps increasing or reducing this value, with correction of the respective throttle actual value, until a propulsion of the throttle against the throttle stop is detected at the output of the controller (5), and in that the search setpoint available at this point in time is stored as operating setpoint for the full-load stop of the throttle.

5. Electronic accelerator peddle according to one or more of the preceding claims, characterized in that a correction characteristic is generated in the computer (3) between the two stops determined.

6. Electronic accelerator peddle according to one of the preceding claims, characterized in that the computer (3) adds an additive constant to the stop setpoint.

7. Electronic accelerator peddle according to one of the preceding claims, characterized in that the servo-motor (8) is deenergized under overrun conditions of the motor vehicle.

8. Electronic accelerator peddle according to Claims 1 to 7, characterized in that the throttle (9) is replaced by the adjusting lever of an injection pump.

0 171 641